(19) Europäisches Patentamt
European Patent Office
Office européen des brevets

(11) **EP 4 633 273 A1**

(12) **EUROPEAN PATENT APPLICATION**
published in accordance with Art. 153(4) EPC

(43) Date of publication:
**15.10.2025 Bulletin 2025/42**

(21) Application number: **23935127.3**

(22) Date of filing: **11.12.2023**

(51) International Patent Classification (IPC):
**H04W 74/08** (2024.01)

(52) Cooperative Patent Classification (CPC):
**H04L 5/00; H04W 74/00; H04W 74/08; H04W 74/0833**

(86) International application number:
**PCT/CN2023/137830**

(87) International publication number:
**WO 2024/221961 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.04.2023 CN 202310480944**

(71) Applicant: **Honor Device Co., Ltd.
Shenzhen, Guangdong 518040 (CN)**

(72) Inventor: **ZENG, Yongbo
Shenzhen, Guangdong 518040 (CN)**

(74) Representative: **MERH-IP Matias Erny Reichl
Hoffmann
Patentanwälte PartG mbB
Paul-Heyse-Straße 29
80336 München (DE)**

(54) **RANDOM ACCESS METHOD AND RELATED APPARATUS**

(57)     This application provides a random access method and a related apparatus, conducive to solving the problem of how to trigger multi-PRACH transmission, thereby reducing the implementation complexity of a terminal device. The method is applied to a terminal device. The method includes: determining that a trigger condition is satisfied; and transmitting a randomly accessed first message based on multiple transmitting beams. The trigger condition includes at least one of the following: a network device allows the terminal device to perform multiple physical random access channel (PRACH) transmissions based on multiple transmitting beams, a service type of the terminal device is a preset service type, and a maximum value in reference signal receiving power (RSRP) of multiple synchronization signal and PBCH blocks (SSBs) detected by the terminal device is lower than a first threshold.

600

| Determine that a trigger condition is satisfied | S601 |

| Transmit a randomly accessed first message based on multiple transmitting beams | S602 |

FIG. 6

**Description**

This application claims priority to Chinese Patent Application No. 202310480944.2, filed with the China National Intellectual Property Administration on April 27, 2023 and entitled "RANDOM ACCESS METHOD AND RELATED APPARATUS", which is incorporated herein by reference in its entirety.

**TECHNICAL FIELD**

This application relates to the field of communication technologies, and in particular, to a random access method and a related apparatus.

**BACKGROUND**

In a wireless communication system, the energy attenuation of a wireless signal in a propagation process is exacerbated as the carrier center frequency of the signal increases. Under the same propagation environment and transmission distance, the higher the frequency of a signal, the faster the energy attenuation of the signal, resulting in a more prominent reduction of signal coverage range. Because a terminal device is limited by transmission power, a coverage problem of an uplink signal is more obvious.

Currently, one of research objectives of the 3rd generation partnership project (3rd generation partnership project, 3GPP) R18 is coverage enhancement of a physical random access channel (physical random access channel, PRACH). A multi-PRACH transmission manner is considered to improve coverage performance. The multi-PRACH transmission manner includes using multiple different transmitting beams to perform repeated transmission of the PRACH.

However, currently, the problem of how to trigger multi-PRACH transmission has not been solved.

**SUMMARY**

This application provides a random access method and a related apparatus, conducive to solving the problem of how to trigger multi-PRACH transmission, thereby reducing the implementation complexity of a terminal device.

According to a first aspect, provided is a random access method, applied to a terminal device. The method includes: determining that a trigger condition is satisfied; and transmitting a randomly accessed first message based on multiple transmitting beams. The trigger condition includes at least one of the following: a network device allows the terminal device to perform multiple PRACH transmissions based on multiple transmitting beams, a service type of the terminal device is a preset service type, and a maximum value in reference signal receiving power (reference signal receiving power, RSRP) of multiple synchronization signal and PBCH blocks (synchronization signal and PBCH block, SSB) detected by the terminal device is lower than a first threshold.

In this application, performing multiple PRACH transmissions may indicate transmission of a first message multiple times. The first message may be a Message 1 (Msg 1) in a four-step random access process. The preset service type may include a delay-sensitive service type and a cell switching service type.

Based on the technical solutions of this application, the terminal device may use a coverage enhancement manner of transmitting the randomly accessed first message based on multiple transmitting beams in a case that the trigger condition is satisfied instead of using the coverage enhancement manner of transmitting the randomly accessed first message based on multiple transmitting beams in any case, thereby being conducive to reducing the implementation complexity of the terminal device.

With reference to the first aspect, in some implementations of the first aspect, the method further includes: receiving first indication information, used for indicating whether the network device allows the terminal device to perform multiple PRACH transmissions based on multiple transmitting beams.

With reference to the first aspect, in some implementations of the first aspect, the first indication information is located in a system information block (system information block, SIB) message.

With reference to the first aspect, in some implementations of the first aspect, the method further includes: determining the number of transmitting beams, the number of transmissions of the first message, and the transmission power for each transmission of the first message. The transmitting a randomly accessed first message based on multiple transmitting beams includes: when transmitting a first message once based on a first transmitting beam in multiple transmitting beams, transmitting the first message at the RACH occasion (RACH occasion, RO) for this transmission of the first message at the transmission power for this transmission of the first message this time, where the first transmitting beam is any one of the multiple transmitting beams. In this way, the terminal device may transmit the first message multiple times based on the multiple transmitting beams, thereby being conducive to improving the transmitting success probability of the first message.

With reference to the first aspect, in some implementations of the first aspect, the method further includes: receiving multiple SSBs; and selecting at least one SSB from the multiple SSBs. The number of the transmitting beams is equal to the number of the at least one SSB, and the number of transmissions of the first message is equal to the number of the at least one SSB. In this way, the terminal device may transmit the first message once on one transmitting beam, so that the implementation is simple.

With reference to the first aspect, in some implementations of the first aspect, the RSRP of each SSB in the at least one SSB is higher than a second threshold.

With reference to the first aspect, in some implementations of the first aspect, the directions of downlink transmitting beams associated with the at least one SSB are different. In this way, the directions of uplink transmitting beams selected by the terminal device according to the downlink transmitting beams are different, thereby being conducive to improving the transmitting success probability of the first message.

With reference to the first aspect, in some implementations of the first aspect, in one PRACH transmission cycle, each SSB in the multiple SSBs is mapped to random access occasions on all frequency domains within the same time period. In this way, different SSBs are mapped to different time periods, and the different SSBs perform PRACH transmission in the different time periods, thereby being conducive to reducing the power consumption of the terminal device.

According to a second aspect, this application provides a terminal device. The terminal device includes: a processor and a memory, where the memory stores computer-executable instructions; and the processor executes the computer-executable instructions stored in the memory to cause the terminal device to perform the method according to the first aspect.

According to a third aspect, this application provides a computer-readable storage medium. The computer-readable storage medium stores a computer program. The computer program, when executed by a processor, implements the method according to the first aspect.

According to a fourth aspect, this application provides a computer program product. The computer program product includes a computer program which, when executed on a computer, causes a computer to perform the method according to the first aspect.

According to a fifth aspect, this application provides a chip. The chip includes a processor, and the processor is configured to invoke a computer program stored in a memory to perform the method according to the first aspect.

It should be understood that the second aspect to the fifth aspect of this application correspond to the technical solution of the first aspect of this application, and the beneficial effects obtained by each aspect and the corresponding feasible implementations are similar. Details are not described herein again.

## BRIEF DESCRIPTION OF DRAWINGS

FIG. 1 is a schematic structural diagram of a terminal device applicable to an embodiment of this application;

FIG. 2 is a schematic diagram of a signal coverage range provided in an embodiment of this application;

FIG. 3 is a schematic flowchart of a four-step random access method provided in an embodiment of this application;

FIG. 4 is a schematic diagram in which different transmitting beams are used to perform repeated transmission of PRACH provided in an embodiment of this application;

FIG. 5 is a schematic architecture diagram of a communication system provided in an embodiment of this application;

FIG. 6 is a schematic flowchart of a random access method provided in an embodiment of this application;

FIG. 7 is a schematic flowchart of another random access method provided in an embodiment of this application;

FIG. 8 is a schematic diagram of a mapping relationship between an SSB and an RO provided in an embodiment of this application;

FIG. 9 is a schematic structural diagram of a random access apparatus provided in an embodiment of this application; and

FIG. 10 is a schematic diagram of hardware structures of another terminal device provided in an embodiment of this application.

## DESCRIPTION OF EMBODIMENTS

The following describes technical solutions in this application with reference to accompanying drawings.

For ease of clearly describing technical solutions in embodiments of this application, the related terms involved in this application are first introduced in detail below.

In the embodiments of this application, words such as "first" and "second" are used to distinguish same or similar items with basically same functions and roles, and the sequence thereof is not limited. Those skilled in the art can understand that the words such as "first" and "second" do not limit a number or an execution order, and the words such as "first" and "second" do not necessarily indicate a difference.

It should be noted that in this application, the word such as "exemplarily" or "for example" is used to indicate giving an example, an illustration, or a description. Any embodiment or design solution described as "exemplarily" or "for example" in this application should not be explained as being more preferred or having more advantages than another embodiment or design solution. Exactly, the use of the words such as "exemplarily" or "for example" is intended to present a related concept in a specific manner.

In addition, "at least one" means one or more, and "multiple" means two or more. "And/or" describes an association relationship between associated objects and represents that three relationships may exist. For example, A and/or B may represent the following three cases: only A exists, both A and B exist, and only B exists, where A and B may be singular or plural. The character "/" generally indicates an "or" relationship between the associated objects. "At least one of the following items (pieces)" or a similar expression thereof means any combination of these items, including a single item (piece) or any combination of multiple items (pieces). For example, at least one item (piece) of a, b, and c may represent: a, or b, or c, or a and b, or a and c, or b and c, or a, b, and c, where a, b, and c may be singular or plural.

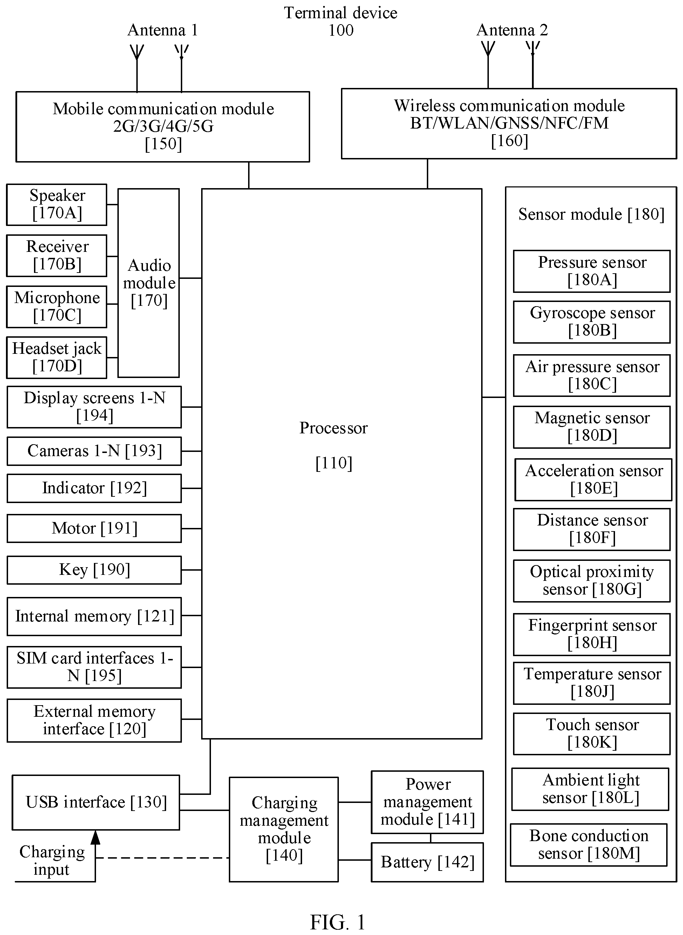

FIG. 1 is a schematic structural diagram of a terminal device applicable to an embodiment of this application. As shown in FIG. 1, the terminal device 100 may include: a processor 110, an external memory interface 120, an internal memory 121, a USB interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identity module (subscriber identity module, SIM) card interface 195, and the like.

It can be understood that the structure illustrated in this embodiment does not constitute a specific limitation to the terminal device 100. In some other embodiments of this application, the terminal device 100 may include more or fewer components than those shown in the figure, or may combine some components or split some components, or have different component arrangements. The components shown in the figure may be implemented by hardware, software, or a combination of software and hardware.

The processor 110 may include one or more processing units. For example: the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a display process unit (display process unit, DPU), and/or a neural-network processing unit (neural-network processing unit, NPU). Different processing units may be separate devices, or may be integrated into one or more processors. In some embodiments, the terminal device 100 may further include one or more processors 110. The processor may be a nerve center and a command center of the terminal device 100. The processor may generate an operation control signal based on an instruction operation code and a timing signal to complete control of instruction fetching and instruction execution. A memory may be further disposed in the processor 110 to store instructions and data. In some embodiments, the memory in the processor 110 is a cache. The memory may save instructions or data that has been used or cyclically used by the processor 110. If the processor 110 needs to use the instructions or the data again, it may directly invoke the instructions or the data from the memory. In this way, the repeated access is avoided, and the waiting time of the processor 110 is reduced, so that the efficiency of the terminal device 100 is improved.

A wireless communication function of the terminal device 100 may be implemented through the antenna 1, the antenna 2, the mobile communication module 150, the wireless communication module 160, the modem processor, the baseband processor, etc. The antenna 1 and the antenna 2 are configured to transmit and receive an electromagnetic wave signal. Each antenna in the terminal device 100 may be configured to cover one or more communication frequency bands. Different antennas may further be reused to improve the antenna utilization. For example, the antenna 1 may be reused as a diversity antenna of a wireless local area network. In some other embodiments, the antennas may be used in combination with a tuning switch.

The mobile communication module 150 may provide a wireless communication solution that is applied to the terminal device 100, including 2G/3G/4G/5G and the like. The mobile communication module 150 may include at least one filter, a switch, a power amplifier, a low noise amplifier, and the like. The mobile communication module 150 may receive an electromagnetic wave via the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation via the antenna 1. In some embodiments, at least some of functional modules of the mobile communication module 150 may be disposed in the processor 110. In some embodiments, at least some of functional modules of the mobile communication module 150 may be disposed in a same device as at least some of modules of the processor 110.

The wireless communication module 160 may provide a solution applied to the terminal device 100 for wireless communication including wireless local area networks (wireless local area networks, WLAN), Bluetooth (Bluetooth, BT), a global navigation satellite system (global navigation satellite system, GNSS), a frequency modulation (frequency modulation, FM) technology, a near field communication (near field communication, NFC) technology, an infrared (infrared, IR) technology, and the like. The wireless communication module 160 may be one or more devices into which at least one communication processing module is integrated. The wireless communication module 160 receives an electromagnetic wave via the antenna 2, performs frequency modulation and filtering on an electromagnetic wave signal, and transmits the processed signal to the processor 110. The wireless communication module 160 may further receive a signal to be transmitted from the processor 110, perform frequency modulation and amplification on the signal to be transmitted, and convert the signal to be transmitted into an electromagnetic wave for radiation via the antenna 2.

In some embodiments, in the terminal device 100, the antenna 1 is coupled to the mobile communication module 150, and the antenna 2 is coupled to the wireless communication module 160 such that the terminal device 100 can be in communication with a network and other devices through a wireless communication technology. The wireless communication technology may include a GSM, a GPRS, a CDMA, a WCDMA, a TD-SCDMA, an LTE, a GNSS, a WLAN, an NFC, an FM, and/or an IR technology. The GNSS may include a global positioning system (global positioning system, GPS), a global navigation satellite system (global navigation satellite system, GLONASS), a bei dou navigation satellite system (bei dou navigation satellite system, BDS), a quasi-zenith satellite system (quasi-zenith satellite system, QZSS), and/or satellite based augmentation systems (satellite based augmentation systems, SBAS).

The display screen 194 is configured to display an image, a video, etc. The display screen 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flex light-emitting diode (flex light-emitting diode, FLED), a Miniled, a MicroLed, a Micro-oLed, or quantum dot light emitting diodes (quantum dot light emitting diodes, QLED). In some embodiments, the terminal device 100 may include one or N display screens 194, where N is a positive integer greater than 1.

The external memory interface 120 may be configured to be connected to an external memory card, for example, a Micro SD card, to extend the storage capability of the terminal device 100. The external memory card communicates with the processor 110 through the external memory interface 120 to implement a data storage function. For example, data files such as music, photos, and videos are stored in the external memory card.

The internal memory 121 may be configured to store one or more computer programs, and the one or more computer programs include instructions. The processor 110 may run the instructions stored in the internal memory 121 to cause the terminal device 100 to perform various function applications, data processing, or the like. The internal memory 121 may include a program storage area and a data storage area. The program storage area may store an operating system. The program storage area may further store one or more applications (such as gallery and contacts) and the like. The data storage area may store data (for example, photos and contacts) and the like created during use of the terminal device 100. In addition, the internal memory 121 may include a high-speed random access memory, or may include a non-volatile memory such as at least one disk storage device, a flash memory device, or a universal flash storage (universal flash storage, UFS). In some embodiments, the processor 110 may cause the terminal device 100 to execute various functional applications and data processing by running instructions stored in the internal memory 121 and/or instructions stored in the memory disposed in the processor 110.

The sensor module 180 may include a pressure sensor 180A, a gyroscope sensor 180B, an air pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

In a wireless communication system, the energy attenuation of a wireless signal in a propagation process is exacerbated as the carrier center frequency of the signal increases. Under the same propagation environment and transmission distance, the higher the frequency of a signal, the faster the energy attenuation of the signal. This means that the coverage range of a high-frequency signal is smaller than the coverage range of a low-frequency signal, and the coverage range of a signal at a high frequency band (for example, an FR2 frequency band) is reduced more significantly.

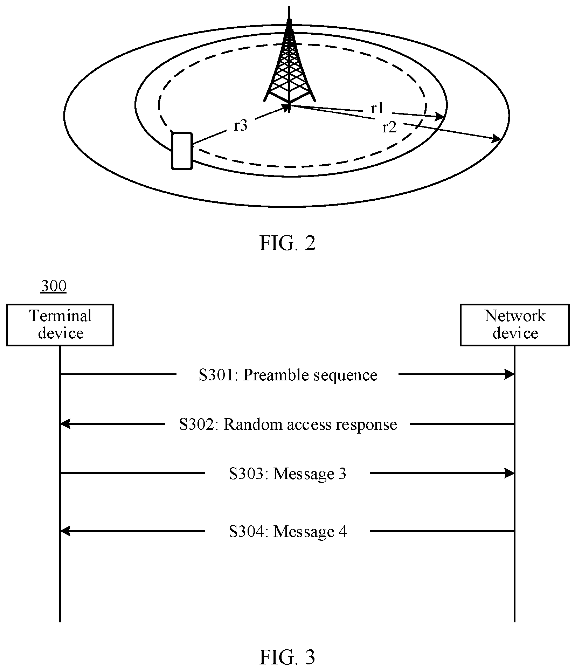

FIG. 2 is a schematic diagram of a signal coverage range provided in an embodiment of this application. As shown in FIG. 2, under the same propagation condition, a downlink coverage range r1 of a high-frequency signal is less than a downlink coverage range r2 of a low-frequency signal. An uplink coverage range r3 of the high-frequency signal of the terminal device is less than the downlink coverage range r1. Therefore, it is necessary to design a coverage enhancement solution for an uplink signal to extend the coverage range of the uplink signal of the terminal device.

The 3GPP R17 discusses the coverage enhancement of a physical uplink shared channel (physical uplink shared channel, PUSCH), a physical uplink control channel (physical uplink control channel, PUCCH), and a Message 3 (Msg 3) in a random access (random access, RA) process, but does not discuss the coverage enhancement of a PRACH. The coverage enhancement of the PRACH is a bottleneck problem of uplink channel coverage, and is very important in processes such as initial access and beam failure recovery.

The related technologies and concepts involved in this application are first introduced below.

Usually, if the terminal device needs to establish a communication with the network device, the terminal device needs to transmit information to the network device through a random access channel (random access channel, RACH), so as to obtain uplink synchronization and obtain an identification of the terminal device to prepare for subsequent scheduling of the terminal device by a network side device.

The random access process includes a process in which the terminal device starts to attempt to access the network by transmitting a preamble sequence (preamble) through the PRACH and successfully establishes a radio resource control (radio resource control, RRC) connection to the network. The preamble sequence may also be referred to as a random access preamble or a preamble. The PRACH is an uplink physical random access channel, and the PRACH and the RACH form a mapping relationship.

Usually, the terminal device and the network device interact to perform the random access process to implement uplink synchronization. Due to varying distances between the terminal device and the network device, the time delay for the uplink signal transmitted to reach the network device differs accordingly. To ensure that uplink signals transmitted by all terminal devices are aligned with a frame time slot (10 ms frame) of the network device when reaching the network device, it is necessary to ensure that unused terminal devices transmit uplink data by using different time advances (time advance, TA).

Types of random access include contention-based random access and non-contention-based random access. For the competition-based random access, when multiple terminal devices simultaneously transmit preamble sequences to the network device, a conflict may occur. Because the network device cannot distinguish which preamble sequence is transmitted by which terminal device, the terminal device needs to transmit a message related to itself to the network device. Therefore, the network device can distinguish preamble sequences transmitted by different terminal devices. For the non-contention-based random access, the network device instructs the terminal device to perform random access at a suitable occasion. Therefore, a competition conflict does not occur.

In a possible random access scenario, a terminal device in an idle state (RRC_IDLE) performs cell search after power-on, and accesses a suitable cell in a random access manner after searching the cell. Using the scenario as an example, with reference to FIG. 3, the following introduces a competition-based random access process used in the current standard, which may also be referred to as a four-step random access process, and relates to interaction of four messages (Message) between the terminal device and the network device. The four messages include a Message 1 (Msg 1), a Message 2 (Msg 2), a Message 3 (Msg 3), and a Message 4 (Msg 4).

FIG. 3 is a schematic flowchart of a four-step random access method 300 provided in an embodiment of this application. The method 300 includes S301 to S304, and specific steps are as follows:

S301: A terminal device transmits a preamble sequence to a network device.

This step corresponds to interaction of an Msg 1 between the terminal device and the network device. In other words, that the terminal device transmits the Msg 1 to the network device includes that the terminal device transmits the preamble sequence to the network device. Optionally, the terminal device transmits one or more preamble sequences to the network device.

The initial random access is initiated by an MAC sublayer of the terminal device. Before S301, the network device may notify all terminal devices of which PRACH resources are allowed to transmit preamble sequences through an SIB message. The RACH, as an uplink random access channel, is configured to transmit a preamble sequence. The PRACH is responsible for carrying the RACH, is a physical channel to which the RACH is mapped and has a fixed time frequency resource, and the time frequency resource may be obtained through the SIB message.

The terminal device may obtain at least one of the following pieces of information in advance through the SIB message transmitted by the network device:

(1) A PRACH channel parameter: The preamble format, the transmission time point (that is, which system frame, which sub-frame, which time slot, and a start symbol) of the PRACH, and the frequency domain resource offset of the PRACH (prach-RreqOffset) (determining the frequency domain position of the PRACH) may be obtained through a preamble sequence configuration index (prach-ConfigIndex).

(2) A random access group and an available preamble sequence of each group.

(3) The size of a random access response window. The terminal device controls reception of the Msg 2 through a window mechanism, and stops receiving the Msg 2 after the size of the random access response window.

(4) A power ascending factor.

(5) The initial transmission power of the preamble sequence.

(6) The maximum number of transmissions of the preamble sequence.

(7) The maximum number of retransmissions of the Msg 3.

(8) A competition resolution timer.

Each cell has 64 available preamble sequences at most, and each preamble sequence has an identification (identification, ID) corresponding to the preamble sequence. For the competition-based random access, the terminal device may randomly select one of multiple preamble sequences for transmission on the PRACH. Therefore, there may be a case in which multiple terminal devices select a same preamble sequence. The preamble sequence usually carries 6 bits of information, where 5 bits represent a random access-radio network temporary identity (random access-radio network temporary identity, RA-RNTI), are used for identifying a time frequency resource in which the terminal device transmits the preamble sequence, and may descramble physical uplink control channel (physical Downlink control channel, PDCCH) information, and 1 bit represents a size of transmission data during Msg 3 uplink scheduling transmission. When transmitting the preamble sequence, the terminal device may calculate the RA-RNTI according to the sub-frame number for transmitting the Msg 1 and the position of the PRACH frequency resource.

S302: The network device transmits a random access response (random access response, RAR) to the terminal device.

This step corresponds to interaction of an Msg 2 between the terminal device and the network device. In other words, that the network device transmits the Msg 2 to the terminal device includes that the network device transmits the RAR to the terminal device.

After transmitting the Msg 1, the terminal device monitors whether the network device transmits the Msg 2 through the RA-RNTI for a period of time (for example, 3 ms). Time during which the terminal device continuously monitors the Msg 2 is the size of the random access response window. Exemplarily, the size of the random access response window is 10 ms at most.

After receiving the Msg 1, the network device calculates correlation peak values by using IDs of 64 preamble sequences one by one with a detected preamble sequence. If a correlation peak value can be obtained by calculating an ID of a preamble sequence with the detected preamble sequence, the preamble sequence is a preamble sequence transmitted by the terminal device. The time delay of data transmission between the terminal device and the network device may further be obtained through correlation peak detection.

After receiving the Msg 1, the network device allocates a temporary cell-RNTI (temporary cell-RNTI, TC-RNTI), and prepares to perform uplink and downlink scheduling transmission. The network device transmits the Msg 2 on a downlink-shared channel (downlink-shared channel, DL-SCH), carrying an ID of a preamble sequence, a tracking area (TA), an uplink Grant (uplink Grant, UL Grant), and a TC-RNTI. The Msg 2 may be transmitted to multiple terminal devices on one DL-SCH.

S303: The terminal device transmits a Message 3 to the network device.

The terminal device receives the Msg 2 in the random access response window, and detects the Msg 2. If the ID of the preamble sequence carried in the Msg 2 is the same as the ID of the preamble sequence transmitted by the terminal device, the terminal device considers that the response succeeds.

The terminal device transmits the Msg 3 to the network device. The Msg 3 may include an RRC connection establishment request, a tracking area update (tracking area update, TAU), a scheduling request, an RRC connection re-establishment request, or the like, and further includes a TC-RNTI and a competition resolution identification in an idle state.

The terminal device transmits the Msg 3 through an uplink-shared channel (uplink-shared channel, DL-SCH). The size of a transmission block may be specified by the UL Grant carried in the Msg 2 received in S302, but is not less than 80 bits.

A reason for establishing an RRC connection may include but is not limited to the following scenarios:

(1) Mobile originating calls (mobile originating calls, Mo-Data): A common scenario includes that the terminal device is in an idle state, and because a service needs to be initiated to reach an RRC connection state (RRC_CONNECTION) again, an RRC connection request may carry a reason value "Mo-Data".
(2) Mobile originating signaling (mobile originating signaling, Mo-Sig): Common scenarios include initial attach and TAU.
(3) Mobile terminal access (MT-Access): A common scenario involves access initiated by a terminal device in response to a paging, or alternatively, service access triggered upon paging reception.
(4) Use of an emergency call.

It should be noted that multiple terminal devices may use a same preamble sequence. Therefore, after the multiple terminal devices receive the Msg 2, it may be considered that the multiple terminal devices respond to the Msg 1 transmitted by the multiple terminal devices, thereby generating competition. The contention may be released by transmitting an Msg 4 through the network device.

S304: The network device transmits a Message 4 to the terminal device.

The Msg 4 includes a competition resolution identification. After receiving the Msg 4, the terminal device compares the received competition resolution identification with the competition resolution identification carried in the Msg 3 by the terminal device. If the competition resolution identification in the Msg 3 is the same as the competition resolution identification in the Msg 4, the competition is resolved, and the random access process succeeds. Otherwise, the competition fails, and the terminal device initiates the random access process again.

A transmission of the Msg 1 by a terminal device to the network device may be considered a PRACH transmission. When the terminal device is located in an area of weak signal coverage, the coverage may be enhanced in the following manners:

(1) Transmission of the preamble sequence is repeated multiple times during a PRACH transmission. and the more repetitions performed, the greater the signal coverage range. However, the number of repetitions of transmission of the preamble sequence in a PRACH transmission is limited, and random access failure may still occur in the single PRACH transmission. Especially, insufficient uplink coverage is more likely to occur in a scenario of a frequency range 2 (frequency range 2, FR 2). The FR 2 includes a millimeter wave frequency band between 24.25 GHz and 52.6 GHz.
(2) When a PRACH transmission fails, for example, when the terminal device does not receive the Msg 2, the terminal device may initiate PRACH retransmission. In the retransmission process, a transmitting beam may be switched, or transmission power may be adjusted. However, different preamble sequences may be selected in the PRACH retransmission process, so that the network device cannot perform diversity reception. In addition, the retransmission after failure further causes a random access time delay.

Currently, the 3GPP R18 starts to research coverage enhancement of a PRACH, including:

(1) Repeated transmission of the PRACH is performed based on same transmitting beams in the four-step random access process.
(2) Repeated transmission of the PRACH is performed based on different transmitting beams in the four-step random access process.

This embodiment of this application mainly relates to performing repeated transmission of the PRACH based on different transmitting beams, or performing multiple PRACH transmissions based on different transmitting beams, or repeatedly performing PRACH transmission based on different transmitting beams. With reference to the description of S301, in a process in which the terminal device transmits the Msg 1 to the network device, the terminal device may perform repeated transmission of the PRACH on different transmitting beams. The network device may receive multiple PRACH transmissions on a same receiving beam or on different receiving beams. It should be understood that the transmitting beam and the receiving beam herein are for uplink transmission. That is, the transmitting beam refers to an uplink transmitting beam of the terminal device, and the receiving beam refers to an uplink receiving beam of the network device.

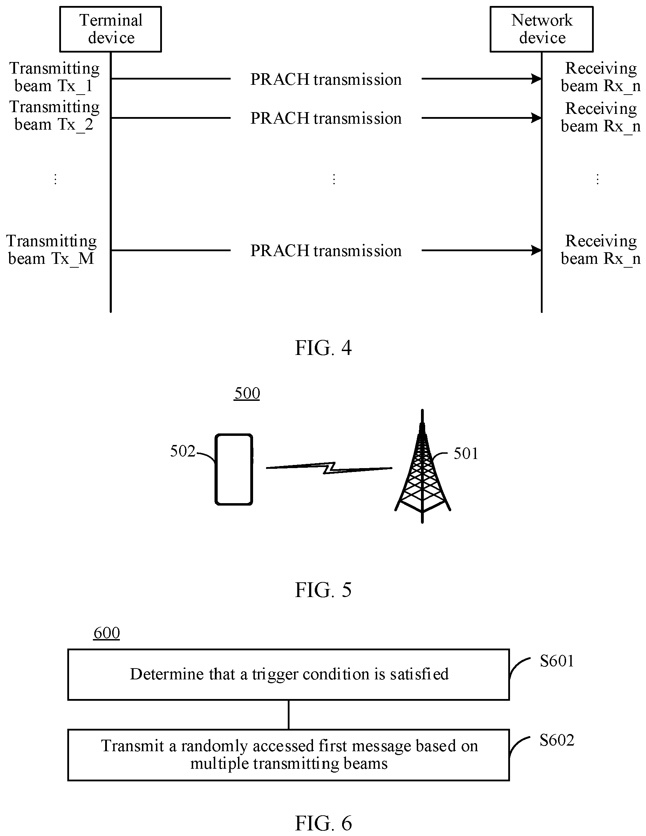

FIG. 4 is a schematic diagram in which different transmitting beams are used to perform repeated transmission of the PRACH provided in an embodiment of this application. As shown in FIG. 4, the terminal device performs repeated transmission of the PRACH by using M transmitting beams, where the M transmitting beams include Tx_1, Tx_2, ..., and Tx_M, and M is a positive integer greater than or equal to 2. The terminal device may perform one time or multiple PRACH transmissions on each transmitting beam. The network device may receive multiple PRACH transmissions on a same receiving beam Rx_n. In this way, the network device may combine and receive the received multiple PRACH transmissions, thereby improving a signal interference noise ratio (SINR) of a reception signal to achieve the purpose of improving the correct receiving probability of a random access signal.

Exemplarily, the number of PRACH transmissions performed by the terminal device based on different transmitting beams may be any value of 2, 4, 6, and 8.

Taking an example in which transmitting beams include Tx_1 and Tx_2 and the number of repetitions of PRACH transmission is 2, the terminal device may perform one PRACH transmission on the transmitting beam Tx_1 and perform one PRACH transmission on the transmitting beam Tx_2.

Taking an example in which transmitting beams include Tx_1 and Tx_2 and the number of repetitions of PRACH transmission is 4, the terminal device may perform two PRACH transmissions on the transmitting beam Tx_1 and perform two PRACH transmissions on the transmitting beam Tx_2. Of course, the terminal device may also perform one PRACH transmission on the transmitting beam Tx_1 and perform three PRACH transmissions on the transmitting beam Tx_2. Or, the terminal device may also perform three PRACH transmissions on the transmitting beam Tx_1 and perform one PRACH transmissions on the transmitting beam Tx_2. This is not limited in the embodiments of this application.

It should be understood that in each PRACH transmission, the terminal device may repeatedly transmit the preamble sequence based on the maximum number of transmissions of the preamble sequence.

One of the objectives of performing multiple PRACH transmissions based on different transmitting beams is to quickly find a relatively suitable uplink transmitting beam of the terminal device or a relatively suitable uplink receiving beam of the network device in multiple different transmitting beams. The network device may transmit multiple SSBs on different downlink transmitting beams, the terminal device selects an SSB according to the RSRP of the multiple SSBs to determine a downlink receiving beam, and then, the terminal device may determine an uplink transmitting beam in a beam alignment manner.

When implementing a coverage enhancement manner of performing the PRACH repeated transmission based on different transmitting beams, the network device needs to perform combined reception of the PRACH transmission of multiple different beams, so that although the correct receiving probability of a signal can be improved, the implementation complexity of the network device is increased to some extent. If the coverage enhancement manner of performing the PRACH repeated transmission based on different transmitting beams is used in any case, the burden on the network device may be increased. In addition, the terminal device needs to switch to use different transmitting beams, which also increases the implementation complexity of the terminal device.

In the current protocol, it is not clarified in which case the terminal device may use the coverage enhancement manner of performing the PRACH repeated transmission based on different transmitting beams, that is, currently, there is a problem of how to trigger the terminal device to perform the PRACH repeated transmission based on different transmitting beams. In view of this, an embodiment of this application provides a random access method. In this method, in a case that a trigger condition is satisfied, the terminal device may use the coverage enhancement manner of performing the PRACH repeated transmission based on different transmitting beams.

FIG. 5 is a schematic architecture diagram of a communication system 500 provided in an embodiment of this application. The communication system 500 shown in FIG. 5 includes a network device 501 and a terminal device 502. It should be understood that the communication system 500 shows one network device (for example, a base station) and one terminal device (for example, a mobile phone). However, the communication system 500 is not limited to one network device and one terminal device. The number and forms of the devices shown in FIG. 5 are merely used as an example, and do not constitute a limitation to the embodiments of this application. In an actual application, two or more network devices and two or more terminal devices may be included.

The technical solutions in the embodiments of this application may be applied to various communication systems, such as a 5th generation (5th generation, 5G) system or a future evolved communication system, and vehicle-to-X (vehicle-to-X, V2X), where V2X may include vehicle to network (V2N), vehicle to vehicle (vehicle to vehicle, V2V), vehicle to infrastructure (vehicle to infrastructure, V2I), vehicle to pedestrian (vehicle to pedestrian, V2P), long term evolution-vehicle (long term evolution-vehicle, LTE-V), Internet of vehicles, machine type communication (machine type communication, MTC), Internet of things (Internet of things, IoT), long term evolution-machine (long term evolution-machine, LTE-M), machine to machine (machine to machine, M2M), device to device (device to device, D2D), and the like.

The terminal device in the embodiments of this application may also be referred to as a terminal, user equipment (user equipment, UE), a mobile station (mobile station, MS), a mobile terminal (mobile terminal, MT), or the like. The terminal device may be a mobile phone, a personal computer (personal computer, PC), a smart TV, a wearable device, a tablet computer (Pad), a computer with a wireless transceiver function, a virtual reality (virtual reality, VR) terminal device, an augmented reality (augmented reality, AR) terminal device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, and the like.

By way of example and not limitation, in the embodiments of this application, the terminal device may also be a wearable device. The wearable device may also be referred to as a smart wearable device, and is a collective term for wearable devices that are intelligently designed and developed for daily wear by using a wearable technology, for example, glasses, gloves, watches, clothes, and shoes. The wearable device is a portable device that is directly worn on a human body or integrated into a user's clothing or accessory. The wearable device is not merely a hardware device, but implements powerful functions through software support, data interaction, and cloud interaction. In a broad sense, smart wearable devices include full-featured and large-size devices that can implement complete or partial functions without depending on smart phones, such as smart watches or smart glasses, and include devices that focus on a specific type of application function and need to be used together with other devices such as smart phones, for example, various smart bands or smart jewelry for monitoring physical signs.

In addition, the terminal device may also be a terminal device in an IoT system. IoT is an important part of development of information technologies in the future, and has a main technical feature of connecting things to a network by using a communication technology to implement an intelligent network for human-machine interconnection and thing-thing interconnection. A specific form of the terminal device is not limited in this application.

It should be understood that in the embodiments of this application, the terminal device may be an apparatus configured to implement a function of the terminal device, or may be an apparatus that can support the terminal device to implement the function, for example, a chip system. The apparatus may be mounted in a terminal. In the embodiments of this application, the chip system may be composed of chips, or may include chips and other discrete devices.

The network device in the embodiments of this application may be any device having a wireless transceiver function. The device includes but is not limited to: an evolved Node B (evolved Node B, eNB), a radio network controller (radio network controller, RNC), a node base (node base, NB), a base station controller (base station controller, BSC), a base transceiver station (base transceiver station, BTS), a home base station (such as a home evolved NodeB, or a home node B, HNB), a base band unit (base band unit, BBU), an access point (access point, AP) in a wireless fidelity (wireless fidelity, WIFI) system, a radio relay node, a radio backhaul node, a transmission point (transmission point, TP) or a transmission and reception point (transmission and reception point, TRP), may also be 5G, such as an NR, a gNB in a system, or a transmission point (TRP or TP), or one or a group of (including multiple antenna panels) antenna panels of a base station in a 5G system, or may also be a network node that constitutes a gNB or a transmission point, such as a base band unit (BBU), or a distributed unit (distributed unit, DU).

It should be understood that in the embodiments of this application, the network device may be an apparatus configured to implement a function of the network device, or may be an apparatus that can support the network device in implementing the function, for example, a chip system. The apparatus may be mounted in the network device. It can be understood that all or some of the functions of the network device in this application may also be implemented by software functions running on hardware, or may be implemented by virtualized functions instantiated on a platform (for example, a cloud platform).

It should also be understood that the network device and the terminal device in the embodiments of this application may be deployed on land, including indoors, outdoors, handheld, or vehicle-mounted; or deployed on a water surface; or deployed in the air, for example, on an aircraft, a balloon, or a satellite. Application scenarios of the network device and the terminal device are not limited in the embodiments of this application.

FIG. 6 is a schematic flowchart of a random access method 600 provided in an embodiment of this application. Exemplarily, the method 600 may be applied to the communication system 500 shown in FIG. 5, and steps of the method 600 may be performed by the terminal device in the communication system 500. The method 600 includes S601 and S602, and specific steps are as follows:

S601: Determine that a trigger condition is satisfied.

In this step, the trigger condition may include at least one of the following: a network device allows a terminal device to perform multiple PRACH transmissions based on multiple transmitting beams, a service type of the terminal device is a preset service type, and a maximum value in RSRP of multiple SSBs detected by the terminal device is lower than a first threshold.

With reference to the foregoing descriptions, in this step, the network device allows the terminal device to perform multiple PRACH transmissions based on multiple transmitting beams. It can be understood that in a random access process, the network device allows the terminal device to perform the PRACH transmission based on multiple transmitting beams, and each transmitting beam may perform one or multiple PRACH transmissions. Therefore, multiple PRACH transmissions may be performed based on multiple transmitting beams.

The terminal device may determine whether to use the coverage enhancement manner of transmitting the randomly accessed first message based on multiple transmitting beams according to service requirements. The preset service type may include a delay-sensitive service type and a cell switching service type. The delay-sensitive service type may be understood as a service type having a relatively high delay requirement or a service type having a low delay requirement.

The delay-sensitive service type may be, for example, a high-definition video type service based on the transmission control protocol (transmission control protocol, TCP), including a 4K/8K high-definition video live streaming and on-demand service, a high-definition video conference, and a large-bandwidth service with an extremely high requirement on real-time performance, such as a virtual reality (virtual reality, VR). For another example, the delay-sensitive service type may include some cloud services, including a cloud desktop, cloud payment, and the like.

The first threshold is a threshold for triggering the terminal device to perform S602.

In an example, the trigger condition includes any one of the foregoing conditions. For example, the trigger condition includes that the network device allows the terminal device to perform multiple PRACH transmissions based on multiple transmitting beams; or, the trigger condition includes that a service type of the terminal device is a preset service type; or, the trigger condition includes that a maximum value in RSRP of multiple SSBs detected by the terminal device is lower than a first threshold.

In another example, the trigger condition includes any two of the foregoing conditions. For example, the trigger condition includes that the network device allows the terminal device to perform multiple PRACH transmissions based on multiple transmitting beams, and a service type of the terminal device is a preset service type; or, the trigger condition includes that the network device allows the terminal device to perform multiple PRACH transmission based on multiple transmitting beams, and a maximum value in RSRP of multiple SSBs detected by the terminal device is lower than a first threshold; or, the trigger condition includes that a service type of the terminal device is a preset service type, and a maximum value in RSRP of multiple SSBs detected by the terminal device is lower than a first threshold.

In still another example, the trigger condition includes three of the foregoing conditions, that is, the trigger condition includes that the network device allows the terminal device to perform multiple PRACH transmissions based on multiple transmitting beams, a service type of the terminal device is a preset service type, and a maximum value in RSRP of multiple SSBs detected by the terminal device is lower than a first threshold.

Optionally, the trigger condition in the embodiments of this application is pre-configured in the terminal device.

S602: A randomly accessed first message is transmitted based on multiple transmitting beams.

In this step, the first message is the Msg 1 described in S301. The multiple transmitting beams include multiple transmitting beams having different transmitting directions. When the terminal device determines that the trigger condition is satisfied, the terminal device transmits the randomly accessed first message based on multiple transmitting beams, and transmits the first message once or more times on each transmitting beam, thus resulting in multiple transmissions of the first message across multiple transmitting beams. The transmitting beam herein indicates an uplink transmitting beam of the terminal device.

It can be known from the foregoing descriptions: the transmission of the Msg 1 from the terminal device to the network device may be considered as one PRACH transmission. The terminal device transmits the randomly accessed first message based on multiple transmitting beams, that is, the terminal device performs multiple PRACH transmissions based on multiple transmitting beams. In the embodiments of this application, that the terminal device transmits the randomly accessed first message based on multiple transmitting beams has the same meaning as that the terminal device transmits the randomly accessed first message based on multiple transmitting beams.

For specific implementations where the terminal device transmits the randomly accessed first message based on multiple transmitting beams, refer to the descriptions for FIG. 4, and details are not described herein again.

As an optional embodiment, before S601, the method 600 further includes: Receive first indication information, used for indicating whether the network device allows the terminal device to perform multiple PRACH transmissions based on multiple transmitting beams. Optionally, the first indication information may be located in an SIB message.

Exemplarily, the network device transmits the SIB message to the terminal device, the SIB message includes the first indication information, and the first indication information is embodied in the form of an information bit.

In an example, if the value of the information bit is "false", it indicates that the terminal device is not allowed to perform multiple PRACH transmissions based on multiple transmitting beams; and if the value of the information bit is "true", it indicates that the terminal device is allowed to perform multiple PRACH transmissions based on multiple transmitting beams.

In another example, if the value of the information bit is "0", it indicates that the terminal device is allowed to perform multiple PRACH transmissions based on multiple transmitting beams; if the value of the information bit is "1", it indicates that the terminal device is allowed to perform multiple PRACH transmission based on one transmitting beam; and if the value of the information bit is "2", it indicates that the terminal device is allowed to perform one PRACH transmission based on one transmitting beam. When the information bit takes a value other than "0", it indicates that the network device does not allow the terminal device to perform multiple PRACH transmissions based on multiple transmitting beams.

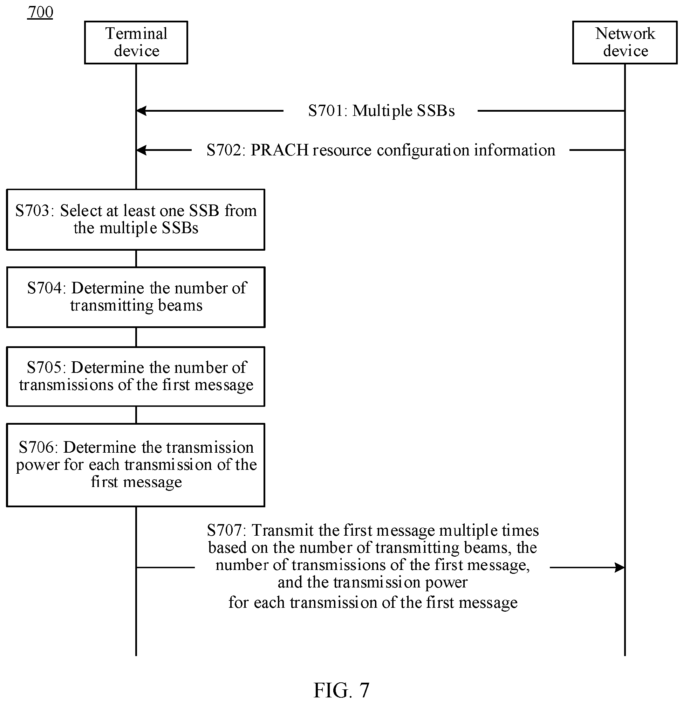

FIG. 7 is a schematic flowchart of another random access method 700 provided in an embodiment of this application. The method 700 includes S701 to S707, and specific steps are as follows:

S701: The network device transmits multiple SSBs to the terminal device. Correspondingly, the terminal device receives the multiple SSBs.

It should be noted that each SSB in multiple SSBs transmitted by the network device is associated with one downlink transmitting beam, that is, corresponds to one beam scanning direction. Finally, there is one SSB in each direction.

Optionally, S701 may be performed before S601 in the method 600.

S702: The network device transmits PRACH resource configuration information to the terminal device. Correspondingly, the terminal device receives PRACH resource configuration information.

The PRACH resource configuration information may include a mapping relationship between each SSB in multiple SSBs and an RO. Optionally, the network device may transmit the PRACH resource configuration information to the terminal device through the SIB message.

Optionally, S702 may be performed before S601 in the method 600.

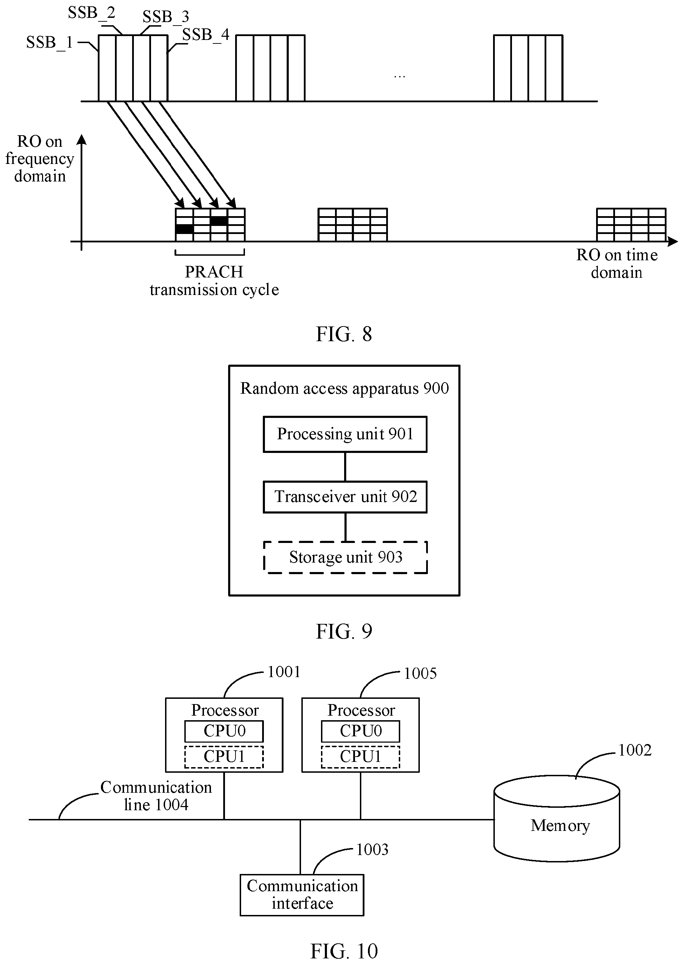

FIG. 8 is a schematic diagram of a mapping relationship between an SSB and an RO provided in an embodiment of this application. In FIG. 8, an example in which multiple SSBs include an SSB_1, an SSB_2, an SSB_3, and an SSB_4 is used. When the network device allows the terminal device to perform multiple PRACH transmissions on different beams, a mapping relationship between an SSB and an RO may be set to a mapping manner of "time domain first and then frequency domain". As shown in FIG. 8, in one PRACH transmission cycle, one SSB is mapped to ROs in all frequency domains in a same time period. After selecting the at least one SSB from the multiple SSBs, the terminal device may determine an RO associated with the at least one SSB, that is, may determine the position of a time frequency resource for each transmission of the first message.

S703: The terminal device selects at least one SSB from multiple SSBs.

After the terminal device receives the multiple SSBs, in a case that the foregoing trigger condition includes that a maximum value in RSRP of multiple SSBs detected by the terminal device is lower than a first threshold, whether the trigger condition is satisfied is determined. In addition, the terminal device may determine the number of transmitting beams, the number of transmissions of the first message, and the transmission power for each transmission of the first message according to multiple SSBs.

Before determining the number of transmitting beams, the number of transmissions of the first message, and the transmission power for each transmission of the first message, the terminal device first selects at least one SSB from multiple SSBs. Possible selection manners are as follows:

Manner 1: The terminal device selects at least one SSB whose RSRP is greater than a second threshold from multiple SSBs.

Manner 2: The terminal device selects SSBs whose RSRP is greater than a third threshold from multiple SSBs, first selects an SSB whose RSRP is the strongest from the SSBs satisfying the condition, and then selects non-adjacent SSBs.

Optionally, the second threshold and the third threshold may be equal or unequal, and this is not limited in the embodiments of this application.

The non-adjacent SSBs in the manner 2 may include SSBs having different directions, that is, the directions of downlink transmitting beams associated with the at least one selected SSB are different. Further, identifications (or referred to as beam numbers) of downlink transmitting beams associated with the at least one SSB are not adjacent.

In an example, the RSRP of an SSB_1, an SSB_2, an SSB_3, and an SSB_4 in multiple SSBs is lower than a third threshold. The SSB_1 is associated with a downlink transmitting beam_1 having an identification of 1, the SSB_2 is associated with a downlink transmitting beam_2 having an identification of 2, the SSB_3 is associated with a downlink transmitting beam_3 having an identification of 3, and the SSB_4 is associated with a downlink transmitting beam_4 having an identification of 4. The direction of the downlink transmitting beam_1 is 20°, the direction of the downlink transmitting beam_2 is 40°, the direction of the downlink transmitting beam_3 is 60°, and the direction of the downlink transmitting beam_4 is 80°. If the RSRP of the SSB_1 is the strongest, the terminal device may first select the SSB_1 and then select the downlink transmitting beam_3 not adjacent to the identification of the downlink transmitting beam_1. In this way, the at least one SBB finally selected from the multiple SSBs includes the downlink transmitting beam_1 and the downlink transmitting beam_3. The directions of the downlink transmitting beam_1 and the downlink transmitting beam_3 are different, and the identifications of the downlink transmitting beam_1 and the downlink transmitting beam_3 are not adjacent to each other.

S704: The terminal device determines the number of transmitting beams.

After selecting the at least one SBB, the terminal device may determine a downlink receiving beam of the terminal device according to the downlink transmitting beam corresponding to the at least one SSB, and further determine an uplink transmitting beam of the terminal device according to the downlink receiving beam of the terminal device in a beam alignment manner.

It should be noted that usually, one downlink receiving beam corresponds to one uplink transmitting beam. In addition, there may be a case in which one downlink receiving beam corresponds to multiple uplink transmitting beams, or multiple downlink receiving beams correspond to one uplink transmitting beam.

It is assumed that the number of the at least one SBB selected by the terminal device is four, and one SSB is associated with one downlink transmitting beam of the network device, that is, associated with one downlink receiving beam of the terminal device, in a case that one downlink receiving beam corresponds to one uplink transmitting beam, the terminal device may determine that the number of uplink transmitting beams is four, that is, may transmit the first message based on four uplink transmitting beams. In this case, the number of uplink transmitting beams of the terminal device is equal to the number of the at least one SBB.

It is assumed that the number of the at least one SBB selected by the terminal device is four, and one SSB is associated with one downlink transmitting beam of the network device, that is, associated with one downlink receiving beam of the terminal device, in a case that one downlink receiving beam corresponds to two uplink transmitting beams and the other three downlink receiving beams correspond to one uplink transmitting beam, the terminal device may determine that the number of uplink transmitting beams is five, that is, may transmit the first message based on five uplink transmitting beams. In this case, the number of uplink transmitting beams of the terminal device is greater than the number of the at least one SBB.

It is assumed that the number of the at least one SBB selected by the terminal device is four, and one SSB is associated with one downlink transmitting beam of the network device, that is, associated with one downlink receiving beam of the terminal device, in a case that two downlink receiving beams correspond to the same uplink transmitting beam and the other two downlink receiving beams respectively correspond to one uplink transmitting beam, the terminal device may determine that the number of uplink transmitting beams is three, that is, may transmit the first message based on three uplink transmitting beams. In this case, the number of uplink transmitting beams of the terminal device is less than the number of the at least one SBB.

S705: The terminal device determines the number of transmissions of the first message.

The terminal device may determine the number of transmissions of the first message according to the number of transmitting beams. It should be noted that the number of transmissions of the first message is greater than or equal to the number of transmitting beams.

In a possible implementation, in a case that the number of transmissions of the first message is equal to the number of transmitting beams, the terminal device transmits the first message once on each transmitting beam.

In another possible implementation, in a case that the number of transmissions of the first message is greater than the number of transmitting beams, the terminal device transmits the first message multiple times on some transmitting beams. In this case, the terminal device may select a value greater than the number of transmitting beams from a preset range of the number of times as the number of transmissions of the first message. Taking an example in which the number of transmitting beams is four and the preset range of the number of times includes two, four, six, and eight, the number of transmissions of the first message is determined to be six or eight.

In the foregoing descriptions, the terminal device first selects at least one SSB from multiple SSBs, and then determines the number of transmitting beams and the number of transmissions of the first message. In addition, the terminal device may also first determine the number of transmissions of the first message, then select at least one SSB from multiple SSBs according to the number of transmissions of the first message, and then determine the number of transmitting beams according to the number of the at least one SSB.

In a possible implementation, the terminal device detects the RSRP of multiple received SSBs. If a maximum value in the RSRP of the multiple SSBs is within a preset interval, the preset interval corresponds to a preset number of PRACH transmissions. Therefore, the terminal device may determine the preset number of PRACH transmissions as the number of transmissions of the first message. After determining the number of transmissions of the first message, the terminal device may determine that the number of the at least one SSB is equal to the number of transmissions of the first message, that is, the terminal device may select at least one SSB whose number is equal to the number of transmissions of the first message from multiple SSBs. After determining the number of the at least one SSB, the terminal device may determine the number of transmitting beams according to the number of the at least one SSB. A specific process of determining the number of transmitting beams according to the number of the at least one SSB is described above, and details are not described herein again.

S706: The terminal device determines the transmission power for each transmission of the first message.

The terminal device needs to transmit the first message at particular transmission power. The transmission power is related to the RSRP of the at least one SSB and the RSRP of each SBB. For PRACHs associated with different SSBs, including mapped ROs, the terminal device may use different transmission power when each transmission of the first message. A calculation formula for PRACH power control is as follows:

$$P_{PRACH}=\min\{P_{max},\ P_{PRACH,\ target}+PL\}$$

where $P_{max}$ represents the maximum power that can be output by the terminal device in each time slot on a serving cell carrier, depends on a type of the terminal device, and is usually considered to be 23 dBm. $P_{PRACH,\ target}$ represents a preamble sequence target parameter, is controlled by open-loop power, and may be determined by a high-level parameter "PREAMBLE_RECEIVED_TARGET_POWER", and PL represents path loss.

A calculation formula of $P_{PRACH,\ target}$ is as follows:

$$P_{PRACH,\ target}= preambleReceivedTargetPower+DELTA\_PREAMBLE$$
$$+(PREAMBLE\_POWER\_RAMPING\_COUNTER-1)$$
$$\times PREAMBLE\_POWER\_RAMPING\_STEP$$

where preambleReceivedTargetPower represents the target received power of a preamble sequence, and may be obtained from a "preambleReceivedTargetPower" parameter in an SIB-1 message.

DELTA_PREAMBLE represents a power offset, and may be determined by converting a PRACH-configuration index (prach-configuration Index) into a preamble format, and then by using a preset corresponding relationship between the preamble format and the PRACH-configuration index. The PRACH-configuration index may be obtained from the SIB-1 message. For example, when the preamble format is "0", the corresponding power offset is 0 dB; when the preamble format is "1", the corresponding power offset is -3 dB; when the preamble format is "2", the corresponding power offset is -6 dB; and when the preamble format is "3", the corresponding power offset is 0 dB.

PREAMBLE_POWER _RAMPING_COUNTER represents the number of transmissions of the preamble sequence, an initial value is 1, and this value is increased by one each time the preamble sequence is retransmitted. PREAMBLE_POWER_RAMPING_STEP represents a transmitting step size of the preamble sequence, and may be obtained from a "powerRampingStep" parameter.

A calculation formula of PL is as follows:

$$PL = referenceSignalPower - HigherlayerfilteredRSRP$$

where referenceSignalPower represents reference signal power, and may be determined by an "ss-PBCH-BlockPower" parameter and a "powerControlOffsetSS" parameter in an SSB or a channel state information reference signal (channel state information reference signal, CSI-RS) associated with the PRACH; and HigherlayerfilteredRSRP represents the RSRP measured when the PRACH is transmitted.

In addition, the network device may configure a transmission power offset in a semi-static configuration or pre-configuration manner to sequentially increase the transmission power when the first message is transmitted multiple times, thereby improving the probability of successful transmission of the first message.

S707: The terminal device transmits the first message multiple times based on the number of transmitting beams, the number of transmissions of the first message, and the transmission power for each transmission of the first message. Correspondingly, the network device may receive the first message multiple times.

Taking an example in which the first message is transmitted once based on a first transmitting beam in multiple transmitting beams, the terminal device transmits the first message at a position of a time frequency resource for this transmission of the first message by using the first transmitting beam at the transmission power for this transmission of the first message.

The random access method provided in the embodiments of this application is described above with reference to FIG. 4 to FIG. 8, and an apparatus provided in the embodiments of this application for performing the foregoing method is described below. As shown in FIG. 9, FIG. 9 is a schematic structural diagram of a random access apparatus provided in an embodiment of this application. The random access apparatus may be a terminal device in the embodiments of this application, or may be a chip or a chip system in the terminal device.

As shown in FIG. 9, the random access apparatus 900 may be used in a communication device, a circuit, a hardware component, or a chip. The random access apparatus 900 includes: a processing unit 901 and a transceiver unit 902. The processing unit 901 is configured to support the random access apparatus 900 in performing steps of information processing. The transceiver unit 902 is configured to support the random access apparatus 900 in performing steps of transmitting data and receiving data. The transceiver unit 902 may be an input/output interface, a pin, a circuit, or the like. In the embodiments of this application, the processing unit may also be referred to as a processing module, and the transceiver unit may also be referred to as a transceiver module.

Specifically, the processing unit 901 is configured to: determine that a trigger condition is satisfied; and the transceiver unit 902 is configured to: transmit a randomly accessed first message based on multiple transmitting beams. The trigger condition includes at least one of the following: a network device allows a terminal device to perform multiple PRACH transmissions based on multiple transmitting beams, a service type of the terminal device is a preset service type, and a maximum value in RSRP of multiple SSBs detected by the terminal device is lower than a first threshold.

In a possible embodiment, the random access apparatus 900 may further include: a storage unit 903. The processing unit 901 is connected to the storage unit 903 through a line. The storage unit 903 may include one or more memories, and the memory may be a component in one or more devices or circuits that is configured to store a program or data. The storage unit 903 may exist independently, and is connected to the processing unit 901 of a calibration apparatus through a communication line. The storage unit 903 may also be integrated with the processing unit 901.

The storage unit 903 may store computer-executable instructions of the method in the terminal device to cause the processing unit 901 to perform the method in the foregoing embodiments. The storage unit 903 may be a register, a cache, a random access memory (random access memory, RAM), or the like. The storage unit 903 may be a read-only memory (read-only memory, ROM) or another type of static storage device that may store static information and instructions, and the storage unit 903 may be independent of the processing unit 901.

FIG. 10 is a schematic diagram of hardware structures of another terminal device provided in an embodiment of this application. As shown in FIG. 10, the terminal device includes a processor 1001, a communication line 1004, and at least one communication interface (for example, a communication interface 1003 in FIG. 10 is used as an example for description).

The processor 1001 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line 1004 may include a circuit configured to transmit information between the foregoing components.

The communication interface 1003 uses any apparatus of a transceiver type to communicate with another device or a communication network such as an Ethernet, wireless local area networks (wireless local area networks, WLAN), and the like.

Possibly, the terminal device may further include a memory 1002.

The memory 1002 may be an ROM, another type of static storage device that can store static information and instructions, an RAM, or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including compressed optical discs, laser discs, optical discs, digital versatile optical discs, and Blu-ray discs), magnetic disk storage media, or another magnetic storage device, or any another medium that can be used to carry or store desired program code in the form of an instruction or a data structure and that can be accessed by a computer, but not limited thereto. The memory may exist independently, and may be connected to the processor through the communication line 1004. The memory may also be integrated with the processor.

The memory 1002 is configured to store computer-executable instruction for performing the solutions of this application, and the computer-executable instructions are controlled by the processor 1001 for execution. The processor 1001 is configured to execute the computer-executable instructions stored in the memory 1002 to implement the method provided in the embodiments of this application.

Possibly, the computer-executable instructions in the embodiments of this application may also be referred to as application code. This is not specifically limited in the embodiments of this application.

During specific implementation, as an embodiment, the processor 1001 may include one or more CPUs, for example, a CPU0 and a CPU1 in FIG. 10.

During specific implementation, as an embodiment, the terminal device may include multiple processors, for example, a processor 1001 and a processor 1005 in FIG. 10. Each of these processors may be a single-CPU, or may be a multi-CPU. The processor herein may refer to one or more devices, circuits, and/or processing cores configured to process data (for example, computer program instructions).

The computer program product includes one or more computer instructions. When the computer program instructions are loaded and executed on the computer, the processes or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any available medium storable by the computer or a data storage device, such as a server or a data center, including one or more available media. For example, the available medium may include a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

The random access method provided in the embodiments of this application may be applied to a terminal device having a communication function. For a specific device form and the like of the terminal device, refer to the foregoing related descriptions. Details are not described herein again.

An embodiment of this application provides a terminal device. The terminal device includes: a processor and a memory. The memory stores computer-executable instructions; and the processor executes the computer-executable instructions stored in the memory to enable the terminal device to perform the foregoing method.

An embodiment of this application provides a chip. The chip includes a processor, and the processor is configured to invoke a computer program in a memory to perform the technical solutions in the foregoing embodiments. Their implementation principles and technical effects are similar to those in the foregoing related embodiments, and details are not described herein again.

An embodiment of this application further provides a computer-readable storage medium. The computer-readable storage medium stores a computer program. The computer program, when executed by a processor, implements the foregoing method. The method described in the foregoing embodiments may be fully or partially implemented by software, hardware, firmware, or any combination thereof. If implemented in software, functions may be used as one or more instructions or codes stored on a computer-readable medium or transmitted on a computer-readable medium. The computer-readable medium may include a computer storage medium and a communication medium, and may further include any medium that can transmit a computer program from one place to another. The storage medium may be any target medium accessible to a computer.

In a possible implementation, the computer-readable medium may include an RAM, an ROM, a compact disc read-only memory (compact disc read-only memory, CD-ROM) or another optical disk memory, a magnetic disk memory or another magnetic storage device, or any other medium that is to carry or store required program code in a form of an instruction or a data structure, and may be accessed by a computer. Moreover, any connection is appropriately referred to as a computer-readable medium. For example, if software is transmitted from a website, a server or another remote source by using a coaxial cable, an optical fiber cable, a twisted pair, a digital subscriber line (digital subscriber line, DSL) or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include a compact disc (CD), a laser disc, an optical disc, a digital versatile disc (digital versatile disc, DVD), a floppy disk, and a blue ray disc. The magnetic disk generally reproduces data in a magnetic manner, and the optical disc reproduces data optically by using laser. A combination of the foregoing should also be included in the scope of the computer-readable medium.

An embodiment of this application provides a computer program product. The computer program product includes a computer program which, when executed, causes a computer to perform the foregoing method.

The embodiments of this application are described with reference to the flowcharts and/or block diagrams of the method, the device (system), and the computer program product according to the embodiments of this application. It should be understood that computer program instructions can implement each process and/or block in the flowcharts and/or block diagrams and a combination of processes and/or blocks in the flowcharts and/or block diagrams. These computer program instructions may be provided for a general-purpose computer, a special-purpose computer, an embedded processor, or a processing unit of any other programmable device to generate a machine, so that the instructions executed by a computer or a processing unit of any other programmable data processing device generate an apparatus for implementing a specific function in one or more processes in the flowcharts and/or in one or more blocks in the block diagrams.

The objectives, technical solutions, and beneficial effects of this application are further described in detail in the foregoing specific implementations. It should be understood that the foregoing descriptions are merely specific implementations of this application, but are not intended to limit the scope of protection of this application. Any modification, equivalent replacement or improvement made based on the technical solutions in this application shall fall within the scope of protection of this application.

**Claims**

1. A random access method, applied to a terminal device, the method comprising:

   determining that a trigger condition is satisfied; and
   transmitting a randomly accessed first message based on multiple transmitting beams, wherein
   the trigger condition comprises at least one of the following:
   a network device allows the terminal device to perform multiple physical random access channel (PRACH) transmissions based on multiple transmitting beams, a service type of the terminal device is a preset service type, and a maximum value in reference signal receiving power (RSRP) of multiple synchronization signal and PBCH blocks (SSBs) detected by the terminal device is lower than a first threshold.

2. The method according to claim 1, further comprising:
   receiving first indication information, used for indicating whether the network device allows the terminal device to perform multiple PRACH transmissions based on multiple transmitting beams.

3. The method according to claim 2, wherein the first indication information is located in a system information block (SIB) message.

4. The method according to any one of claims 1 to 3, further comprising:

   determining the number of the transmitting beams, the number of transmissions of the first message, and the transmission power for each transmission of the first message; and
   the transmitting a randomly accessed first message based on multiple transmitting beams comprises:
   when transmitting the first message once based on a first transmitting beam in the multiple transmitting beams, transmitting the first message at the random access occasion for this transmission of the first message this time at the transmission power for this transmission of the first message, wherein the first transmitting beam is any one of the multiple transmitting beams.

5. The method according to claim 4, further comprising:

   receiving the multiple SSBs; and
   selecting at least one SSB from the multiple SSBs, wherein
   the number of the transmitting beams is equal to the number of the at least one SSB, and the number of transmissions of the first message is equal to the number of the at least one SSB.

**6.** The method according to claim 5, wherein the RSRP of each SSB in the at least one SSB is greater than a second threshold.

**7.** The method according to claim 6, wherein the directions of downlink transmitting beams associated with the at least one SSB are different.

**8.** The method according to any one of claims 5 to 7, wherein in one PRACH transmission cycle, each SSB in the multiple SSBs is mapped to random access occasions on all frequency domains within the same time period.

**9.** A random access apparatus, comprising modules configured to perform the method according to any one of claims 1 to 8.

**10.** A random access apparatus, comprising: a processor and a memory, wherein the memory is configured to store a computer program; and
the processor is configured to invoke and execute the computer program to cause the apparatus to perform the method according to any one of claims 1 to 8.

**11.** A computer-readable storage medium, configured to store a computer program which, when executed on a computer, causes the computer to perform the method according to any one of claims 1 to 8.

**12.** A computer program product, comprising a computer program which, when executed on a computer, causes a computer to perform the method according to any one of claims 1 to 8.

Terminal device
100

Antenna 1                 Antenna 2

| Mobile communication module 2G/3G/4G/5G [150] | Wireless communication module BT/WLAN/GNSS/NFC/FM [160] |
|---|---|

Speaker [170A]

Receiver [170B]

Audio module [170]

Microphone [170C]

Headset jack [170D]

Display screens 1-N [194]

Cameras 1-N [193]

Indicator [192]

Motor [191]

Key [190]

Internal memory [121]

SIM card interfaces 1-N [195]

External memory interface [120]

Processor

[110]

Sensor module [180]

Pressure sensor [180A]

Gyroscope sensor [180B]

Air pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [130]

Charging input

Charging management module [140]

Power management module [141]

Battery [142]

FIG. 1

FIG. 2

FIG. 3

| Terminal device | | | Network device |
|---|---|---|---|
| Transmitting beam Tx_1 | PRACH transmission → | | Receiving beam Rx_n |
| Transmitting beam Tx_2 | PRACH transmission → | | Receiving beam Rx_n |
| ⋮ | ⋮ | | ⋮ |
| Transmitting beam Tx_M | PRACH transmission → | | Receiving beam Rx_n |

FIG. 4

500

502 — □ —⚡— 🗼 — 501

FIG. 5

600

| Determine that a trigger condition is satisfied | S601 |
|---|---|
| Transmit a randomly accessed first message based on multiple transmitting beams | S602 |

FIG. 6

700

| Terminal device | | Network device |

S701: Multiple SSBs

S702: PRACH resource configuration information

S703: Select at least one SSB from the multiple SSBs

S704: Determine the number of transmitting beams

S705: Determine the number of transmissions of the first message

S706: Determine the transmission power for each transmission of the first message

S707: Transmit the first message multiple times based on the number of transmitting beams, the number of transmissions of the first message, and the transmission power for each transmission of the first message

FIG. 7

SSB_2  SSB_3
SSB_1 ⌐  ⌐SSB_4

RO on
frequency
domain

PRACH
transmission cycle

RO on time
domain

## FIG. 8

Random access apparatus 900

Processing unit 901

Transceiver unit 902

Storage unit 903

## FIG. 9

┌ 1001    ┌ 1005

Processor    Processor
CPU0         CPU0
CPU1         CPU1

┌ 1002

Communication
line 1004

┌ 1003

Memory

Communication
interface

## FIG. 10

## INTERNATIONAL SEARCH REPORT

| International application No. |
| --- |
| **PCT/CN2023/137830** |

**A.    CLASSIFICATION OF SUBJECT MATTER**

H04W74/08(2024.01)i

According to International Patent Classification (IPC) or to both national classification and IPC

**B.    FIELDS SEARCHED**

Minimum documentation searched (classification system followed by classification symbols)

IPC:H04W、H04L、H04J

Documentation searched other than minimum documentation to the extent that such documents are included in the fields searched

Electronic data base consulted during the international search (name of data base and, where practicable, search terms used)

CNTXT, WPABSC, ENTXTC, DWPI, VEN, 3GPP: 随机接入, 波束, 触发, PRACH, SSB, 功率, 业务类型, 同步; random, access, beam, power, trigger, synchronization, type.

**C.    DOCUMENTS CONSIDERED TO BE RELEVANT**

| Category* | Citation of document, with indication, where appropriate, of the relevant passages | Relevant to claim No. |
| --- | --- | --- |
| A | CN 115996394 A (HUAWEI TECHNOLOGIES CO., LTD.) 21 April 2023 (2023-04-21) entire document | 1-12 |
| A | CN 109963350 A (HUAWEI TECHNOLOGIES CO., LTD.) 02 July 2019 (2019-07-02) entire document | 1-12 |
| A | CN 112787785 A (HUAWEI TECHNOLOGIES CO., LTD.) 11 May 2021 (2021-05-11) entire document | 1-12 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 March 2024** | **11 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 633 273 A1

## INTERNATIONAL SEARCH REPORT
### Information on patent family members

International application No.

**PCT/CN2023/137830**

| Patent document cited in search report | | | Publication date (day/month/year) | Patent family member(s) | | | Publication date (day/month/year) |
|---|---|---|---|---|---|---|---|
| CN | 115996394 | A | 21 April 2023 | None | | | |
| CN | 109963350 | A | 02 July 2019 | WO | 2019128760 | A1 | 04 July 2019 |
| CN | 112787785 | A | 11 May 2021 | None | | | |

Form PCT/ISA/210 (patent family annex) (July 2022)

24

**EP 4 633 273 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310480944